# EUROPEAN PATENT SPECIFICATION

(11) **EP 2 514 545 B1**
(45) Date of publication and mention of the grant of the patent: **28.09.2016**
(21) Application number: 12160653.7
(22) Date of filing: 21.03.2012
(51) Int. Cl.: B23D 47/04, B23Q 5/04, B23Q 35/08, B23Q 35/28

(54) **WORKING HEAD AND METHOD FOR WORKING WORKPIECES OF WOOD OR SIMILAR MATERIALS**
ARBEITSKOPF FÜR WERKSTÜCKE UND METHODE ZUR ARBEIT VON WERKSTÜCKEN AUS HOLZ ODER AUS ÄNHLICHEN MATERIALEN
TÊTE DE TRAVAIL ET MÉTHODE DE TRAVAIL POUR DES PIÈCES DE BOIS OU DE MATÉRIAUX SIMILAIRES

(30) Priority: 21.03.2011 IT BO20110136
(43) Date of publication of application: 24.10.2012
(73) Proprietor: Biesse S.p.A., Pesaro (IT)
(72) Inventor: Vichi, Alessandro, 61100 PESARO (IT)
(74) Representative: Bergadano, Mirko

(56) References cited:
- EP-A1- 2 135 706
- EP-A1- 2 253 422
- EP-A2- 1 316 385
- DE-A1-102004 021 134
- FR-A1- 2 443 306
- US-A- 3 893 372

## Description

The present invention relates to an operating head for processing wood components or the like, and a method for doing the same according to the preambles of claims 1 and 11. Such an operating head and method are known from document FR 2 443 306.

In the field of processing wood components or the like, it is known to provide an operating head comprising an electrospindle comprising, in turn, a first electric motor, which is housed within a first support casing, and has a tubular output shaft defining a tool-holding spindle on which an input shaft of an assembly for processing components is engaged.

The assembly further comprises a cutting tool which is actuated by the input shaft, and a second support casing, which is rotatingly engaged by the input shaft, and is rotatingly coupled to the first casing so as to rotate, with respect to the first casing itself, about a longitudinal axis of the electrospindle.

The assembly and, therefore, the tool are oriented about the longitudinal axis of the electrospindle by means of a second electric motor mounted coaxially to the electrospindle or mounted laterally to the electrospindle and connected to the second housing by means of a reduction gear.

When the processing requires the tool to move along the component as a function of a profile of the surface of the component, the assembly cooperates with a copying device adapted to be moved and maintained in contact with said component.

The copying devices used in the known operating heads described above are generally of two types.

According to a first type, the assembly defined by the tool and the copying device is slidingly coupled to the second casing by interposing an elastic damping device which allows the tool and the copying device to move along the component as a function of the profile of the surface of said component.

According to the other of the two aforementioned known types, the copying device is mounted in front of the assembly, is independent of the assembly, and comprises a copying member which is slidingly coupled to a support frame by interposing an elastic damping device, the deformation of which allows an electronic control unit to obtain the profile of the surface of the component and move the assembly and, therefore, the tool as a function of said profile.

From what is described above, it follows that the operating heads provided with the known copying devices of the two types described above are relatively complex, cumbersome and expensive.

When the processing involves detecting the position of the component, the assembly cooperates with a tracer device, which is independent of the assembly, and is moved so that it is in contact with the component so as to detect the position thereof and allow an electronic control device to selectively control the position of the operating head and, therefore, the tool with respect to said component as a function of the detected position.

The presence of an auxiliary tracer device makes the known operating heads of the type described above relatively complex, cumbersome and expensive.

The object of the present invention is to provide an operating head for processing wood components or the like which is free from the above-described drawbacks and which is simple and cost-effective to be implemented.

According to the present invention, an operating head for processing wood components or the like is provided as claimed in the claims from 1 to 10.

The present invention further relates to a method for processing wood components or the like, as claimed in the claims from 11 to 14.

The present invention will now be described with reference to the accompanying drawings, which illustrate an embodiment thereof by way of non-limiting example, in which:
figure 1 is an exploded perspective view of a preferred embodiment of the operating head of the present invention;
figure 2 is a diagrammatic plan view of a detail of the operating head in figure 1 shown in four different operating positions;
figure 3 is a diagrammatic perspective view of a first variation of the detail in figure 2;
figure 4 is a diagrammatic plan view of the variation in figure 3 shown in three different operating positions; and
figure 5 is a diagrammatic plan view of a second variation of the detail in figure 2 shown in two different operating positions.

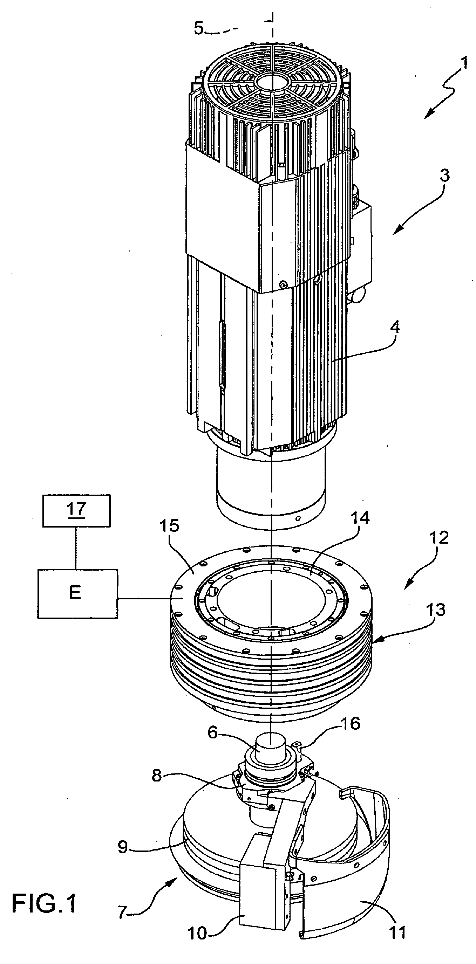

With reference to figure 1, numeral 1 indicates, as a whole, an operating head for processing wood components 2 comprising, in this case, an electrospindle 3 provided with an external tubular casing 4, which has a substantially vertical longitudinal axis 5, and houses therein an electric motor of the known type (not shown).

The electric motor (not shown) is provided with a tubular output shaft (not shown), which is mounted so as to rotate, with respect to casing 4, about axis 5, and has a free end portion defining a tool-holding spindle (not shown) on which an input shaft 6 of an interchangeable assembly 7 is engaged.

Assembly 7 comprises an external tubular casing 8 which is rotatingly engaged by shaft 6, a milling tool 9 splined on a free end of shaft 6 protruding outside of casing 8, and an anti-splinter block 10 which has the profile of tool 9, extends about tool 9, is fixed to casing 8, and cooperates with a deflector 11 of shavings and/or waste from processing, which extends about axis 5, is fixed to block 10, and is arranged in front of block 10 in the direction of advancement of tool 9 during the processing of component 2.

Casing 8 and, therefore, block 10 are oriented about axis 5 by means of an orienting device 12 comprising an electric motor 13 which is coaxially mounted to axis 5 and comprises, in turn, an internal tubular stator 14, which is fitted on a free end of casing 4, and is angularly coupled and axially fixed to casing 4 itself, and an external rotor 15, which is substantially cup-shaped with concavity facing upwards, extends about stator 14 so as to rotate, with respect to stator 14, about axis 5, and is angularly fixed coupled to casing 8 by means of a coupling pin 16, which protrudes upwards from the casing 8 parallel to axis 5, and engages a hole (not shown) obtained through said rotor 15.

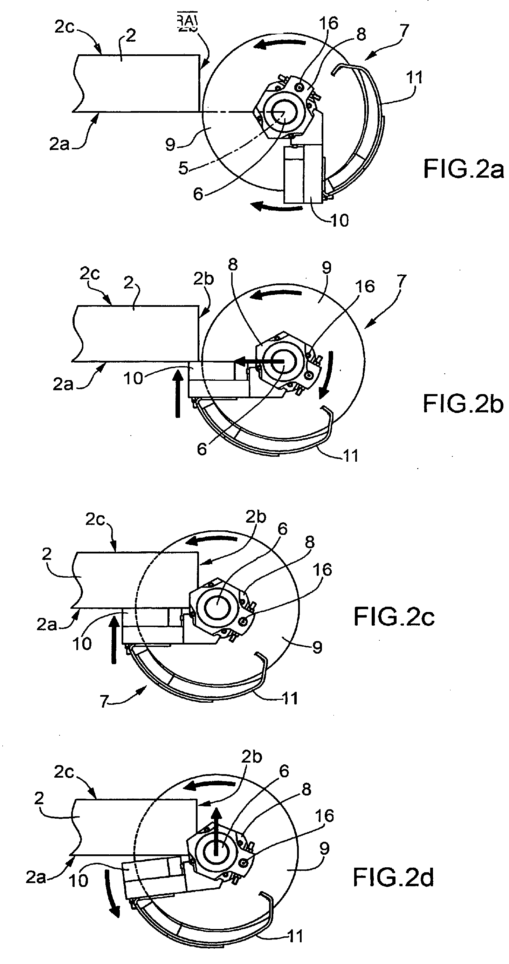

In use, block 10 is moved and maintained by device 12 in an operating position (figure 2b), in which block 10 is arranged in contact with a face 2a of component 2; and operating head 1 is moved parallel to face 2a in order to allow tool 9 to begin the processing of a face 2b of component 2 perpendicular to face 2a so as to disengage component 2 by means of block 10 without splintering said component 2 (figure 2c).

When tool 9 has been advanced to a defined depth within component 2 (figure 2c), block 10 is rotated by device 12 in a rest position (figure 2a) arranged according to an angle of around 90° with respect to the operating position so as to avoid block 10 interfering with component 2; and operating head 1 is moved parallel to face 2b in order to allow tool 9 to complete the processing of face 2b and to disengage component 2 at a face 2c of component 2 parallel and opposite to face 2a.

With regard to what is stated above, it is appropriate to specify that operating head 1 is connected to an electronic control unit 17 adapted to measure a torque generated by motor 13 and selectively control a resting force F exerted by block 10 on component 2.

Control unit 17 is connected, furthermore, to a detecting device, for example an encoder E, mounted on rotor 15 in order to detect the position of rotor 15 and, therefore, block 10 about axis 5 and allow control unit 17 to detect the position of face 2a. When the effective position of face 2a detected by means of encoder E differs from the theoretical position stored in control unit 17 and block 10 is arranged in contact with face 2a according to an angle different than 0°, operating head 1 is moved so as to allow a supporting face of block 10 to be arranged parallel to said face 2a.

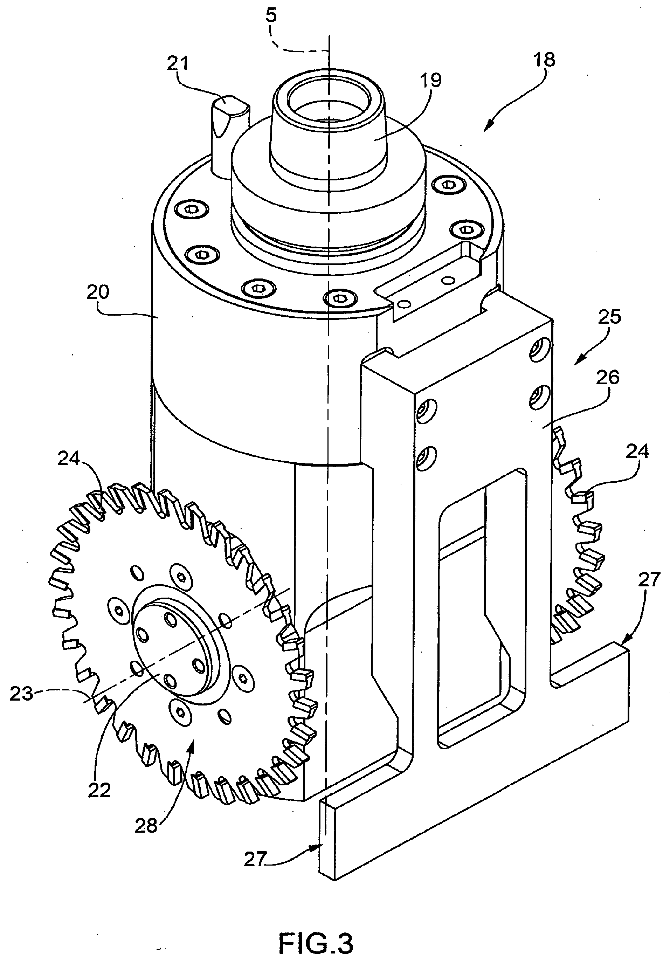

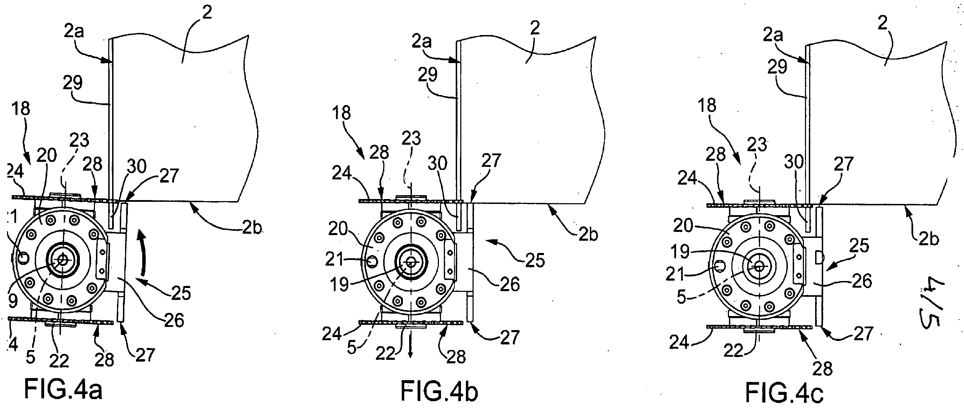

The variation shown in figures 3 and 4 differs from what is shown in the preceding figures exclusively for the fact that, therein, assembly 7 is eliminated and replaced with an interchangeable assembly 18 comprising an input shaft 19, which is engaged on electrospindle 3 coaxially to axis 5, and is rotatingly engaged by means of a tubular casing 20, which is substantially coaxial to axis 5, and is angularly fixedly coupled to rotor 15 of motor 13 by means of a coupling pin 21 which is completely analogous to pin 16.

Assembly 18 further comprises a tool-holding spindle 22, which is coupled with shaft 19 by means of a known conical redaction gear (not shown) so as to rotate, with respect to casing 20, about a longitudinal axis 23 thereof perpendicular to axis 5, and has two free ends which are opposite to each other, each of which protrudes outside of casing 20, and supports a cutting blade 24 mounted coaxially to said axis 23.

Assembly 18 is further provided with a resting member 25 comprising a substantially flat plate 26, which is fixed to casing 20 parallel to the axes 5 and 23 and perpendicularly to the blades 24, has a substantially T-shaped form, and is laterally limited by two end faces 27 which are parallel to each other, each of which extends in a containment surface, which is substantially perpendicular to axis 23, and is parallel to, and distinct from a containment surface of an end face 28 of the adjacent blade 24.

In this case:
assembly 18 is used to face a finishing edge 29 applied on a face 2a of component 2 so as to have two end portions 30 (only one of which shown in figures 4a, 4b, and 4c), each protruding from a respective face 2b of component 2 substantially perpendicular to face 2a; and
member 25 is used with so-called "tracirig" functions of component 2.

In use, once assembly 18 has been moved in correspondence of one of the portions 30 (figure 4a), casing 20 is rotated about axis 5 by device 12 so as to move plate 26 into contact with face 2b (figure 4b).

The position of resting member 25 about axis 5 is detected by encoder E so as to allow control unit 17 to firstly detect the position of face 2b and therefore to command the movement of operating head 1 so as to arrange face 28 of the concerned blade 24 in a position which is coplanar to face 2b (figure 4c).

The effective position of face 2b detected by means of encoder E can be stored in control unit 17 and used to perform subsequent processing of component 2.

At this point, operating head 1 is moved parallel to axis 5 so as to allow blade 24 to separate portion 30 from edge 29.

Similarly to what is described for assembly 7, also in the case of assembly 18, control unit 17 allows the measurement of a torque generated by motor 13 and the selective control of a resting force F exerted by plate 26 on component 2.

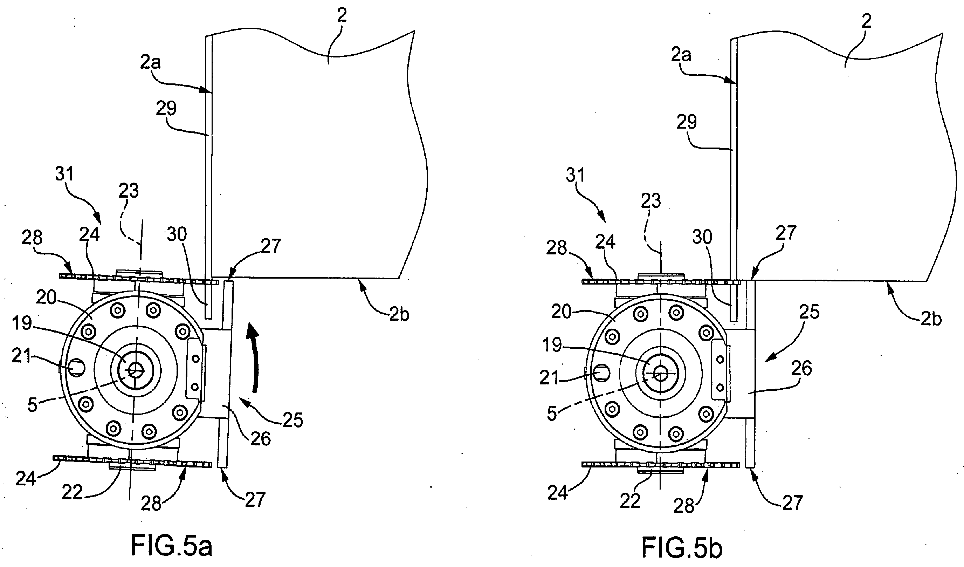

Figure 5 relates to an interchangeable assembly 31, which differs from assembly 18 solely in that, therein, each face 27 of plate 26 is coplanar to face 28 of the adjacent blade 24, and is used to face edge 29 with so-called "tracing" and/or "copying" functions of component 2.

In use, once assembly 31 has been moved in correspondence of one of the portions 30 (figure 5a), casing 20 is rotated about axis 5 by device 12 so as to move plate 26 into contact with face 2b (figure 5b).

The position of resting member 25 about axis 5 can be detected by the aforementioned detecting device (not shown) so as to allow member 25 to carry out a "tracing" function and control unit 17 to detect and store the position of face 2b and to use this information in order to perform subsequent processing of component 2.

At this point, operating head 1 is moved parallel to axis 5 so as to allow member 25 to move along face 2b and blade 24 to separate portion 30 from edge 29.

During the movement along face 2b, casing 20 is mobile about axis 5 as a function of the profile of face 2b so as to allow member 25 to carry out a "copying" function of said face 2b and control unit 17 to selectively control the movement of casing 20 about axis 5 maintaining member 25 in contact with face 2b with a substantially constant resting force F.

Assemblies 7, 18, 31 have several advantages which mainly derive from anti-splinter block 10 and resting member 25, respectively, being integrated therein; using its/their own orientation about axis 5, already normally present in commercially available operating heads, so as to move anti-splinter block 10 and resting member 25 to a position in which they are in contact with the components 2; selectively controlling resting force F of anti-splinter block 10 and resting member 25 against said components 2; and detecting the effective position of face 2a in the case of assembly 7 and face 2b in the case of assemblies 18, 31.

In other words, operating head 1 is relatively simple and cost-effective, has relatively small dimensions and avoids the use of the complex and expensive tracing devices, copying devices and anti-splinter blocks employed in the operating heads currently on the market.

According to some variations (not shown):
each assembly 7, 18, 31 is not interchangeable and is permanently mounted on electrospindle 3;
electrospindle 3 is eliminated and replaced with an electric motor of a different type;
electric motor 13 is eliminated and replaced with an electric motor fixed laterally to electrospindle 3 and provided with an output shaft, which has a longitudinal axis parallel to axis 5, and is connected to assemblies 7, 18, 31 by means of a reduction gear;
each assembly 7, 18, 31 is angularly fixed coupled to electrospindle 3, which is rotatingly coupled to a support frame, in turn rotatingly mounted so as to orient electrospindle 3 and, therefore, assembly 7, 18, 31 about a defined rotation axis; and
resting block 10 and resting member 25 are mounted on rotor 15.

## Claims

1. An operating head for processing wood components (2) or the like comprising an electrospindle (3) comprising, in turn, a first support casing (4) and a first electric motor, which is housed inside the first casing (4), and presents a first output shaft mounted so as to rotate around an axis (5); a tool assembly (7; 18; 31) fitted to the electrospindle (3) and comprising, in turn, a second support casing (8; 20) mounted so as to rotate around said axis (5), an input shaft (6; 19), which is engaged in a rotating manner through the second casing (8; 20) and is connected to the first output shaft, and a cutting tool (9; 24), which is actuated by said input shaft (6; 19); an orienting device (12) for orienting the second casing (8; 20) around said axis (5); and a resting member (10; 25), which is moved by the orienting device (12) in contact with a component (2) being processed; the resting member (10; 25) being an anti-splinter member (10) or a tracing member (25) or a copying member (25) or a tracing and copying member (25); and **characterised in that** the orienting device (12) comprises a second electric motor (13) having a second output shaft (15), which is mounted so as to rotate around said axis (5); a measuring device (17) being provided, so as to measure a torque generated by the second electric motor (13) and to selectively control a resting force (F) exerted by the resting member (10; 25) on the component (2) being processed.

2. An operating head according to claim 1, wherein the resting member (10; 25) is fitted to the second casing (8; 20), so as to be moved by the orienting device (12) around said axis (5).

3. An operating head according to claim 1, wherein the orienting device (12) comprises a rotating member (15), which is assembled so as to rotate around said axis (5); the resting member (10; 25) being fitted to the rotating member (15).

4. An operating head according to any of the previous claims and comprising, furthermore, a detecting device (E) for detecting the position of the resting member (10; 25) during its movement under the thrust of the orienting device (12).

5. An operating head according to any of the previous claims and comprising, furthermore, a detecting device (E) for detecting the position of the resting member (10; 25), when it is arranged in contact with the component (2); the operating head being mobile, so as to move the cutting tool (9; 24) and/or the resting member (10; 25) with respect to the component (2) as a function of the position detected by the detecting device (E).

6. An operating head according to any of the claims from 1 to 4, wherein the operating head and the component (2) being processed are mobile with respect to one another, so as to allow the resting member (25) to follow a profile of the component (2) itself; the orienting device (12) being suited to move the cutting tool (24) and the resting member (25) as a function of the profile of the component (2).

7. An operating head according to any of the claims from 1 to 4, wherein the resting member (10) comprises an anti-splinter block, which is mobile between an operating position, in which the anti-splinter block is arranged substantially in contact with the component (2), and at least one rest position, in which the anti-splinter block disengages the component (2) itself.

8. An operating head according to any of the previous claims, wherein the tool assembly (7; 18; 31) comprises an interchangeable assembly, which is fitted to the electrospindle itself.

9. An operating head according to any of the previous claims, wherein the second casing (8; 20) is coupled in a rotating manner to the first casing (4), so as to rotate, with respect to the first casing (4), around said axis (5).

10. An operating head according to any of the claims from 1 to 8 and comprising, furthermore, a support frame, which is mounted so as to rotate around said axis (5); the first casing (4) being fitted to the support frame and supporting the second casing (8; 20), which is connected to it.

11. A method for processing wood components (2) or the like with an operating head comprising an electrospindle (3) comprising, in turn, a first support casing (4) and a first electric motor, which is housed inside the first casing (4), and presents a first output shaft mounted so as to rotate around an axis (5); a tool assembly (7; 18; 31) fitted to the actuating assembly (3) and comprising, in turn, a second support casing (8; 20) assembled so as to rotate around said axis (5), an input shaft (6; 19), which is engaged in a rotating manner through the second casing (8; 20) and is connected to the first output shaft, and a cutting tool (9; 24), which is actuated by said input shaft (6; 19); and an orienting device (12) for orienting the second casing (8; 20) around said axis (5), the orienting device (12) comprising a second electric motor (13) having a second output shaft (15) mounted so as to rotate around said axis (5); the method comprising the step of:
moving, by means of the orienting device (12), a resting member (10; 25) in contact with a component (2) being processed; the resting member (10; 25) being an anti-splinter member (10) or a tracing member (25) or a copying member (25) or a tracing and copying member (25);
and being **characterised in that** it comprises, furthermore, the steps of:
measuring a torque generated by the second electric motor (13); and
selectively controlling a resting force (F) exerted by the resting member (10; 25) on the component (2) being processed as a function of the torque measured.

12. Method according to claim 11 and comprising, furthermore, the step of:
detecting the position of the resting member (10; 25) during its movement under the thrust of the orienting device (12).

13. Method according to claim 11 or 12 and comprising, furthermore, the steps of:
detecting the position of the resting member (10; 25), when it is arranged in contact with the component (2); and
moving the cutting tool (24) and/or the resting member (10; 25) with respect to the component (2) as a function of the position detected.

14. Method according to claim 11 or 12 and comprising, furthermore, the steps of:
moving the operating head and the component (2) being processed with respect to one another, so as to allow the resting member (25) to follow a profile of the component (2) itself; and
moving the cutting tool (24) and the resting member (25) as a function of the profile of the component (2).

## Patentansprüche

1. Arbeitskopf zum Bearbeiten von Komponenten (2) aus Holz oder dergleichen, umfassend eine Elektrospindel (3), die ihrerseits ein erstes Traggehäuse (4) und einen ersten Elektromotor umfasst, der innerhalb des ersten Gehäuses (4) angeordnet ist, und eine erste Ausgangswelle aufweist, derart angeordnet, dass sie um eine Achse (5) umläuft; eine Werkzeugeinheit (7; 18; 31), montiert an der Elektrospindel (3) und ihrerseits ein zweites Traggehäuse (8; 20) umfassend, derart montiert, dass es um die zweite Achse (5) umläuft; eine Eingangswelle (6; 19), die mit dem zweiten Gehäuse (8; 20) drehfest und an die erste Ausgangswelle angeschlossen ist, und ein Schneidwerkzeug (9; 24), das von der Eingangswelle (6; 19) angetrieben ist; eine Ausrichteinheit (12) zum Ausrichten des zweiten Gehäuses (8; 20), um die Achse (5); und eine Rasteinheit (10; 25), die in Kontakt mit einer zu bearbeitenden Komponente (2) von der Ausrichteinheit (12) bewegt wird; die Rasteinheit (10; 25) ist ein Antisplitterelement (10) oder ein Abtastelement (25) oder ein Kopierelement (25) oder ein Abtast- und Kopierelement (25);
**dadurch gekennzeichnet, dass**
die Ausrichteinheit (12) einen zweiten Elektromotor (13) umfasst mit einer zweiten Ausgangswelle (15), derart montiert, dass er um die Achse (5) umläuft; eine Messeinrichtung (17) zum Messen eines Drehmomentes, erzeugt vom zweiten Elektromotor (13) zum selektiven Kontrollieren einer Ruhekraft (F), ausgeübt von der Rasteinheit (10; 25) auf die zu bearbeitende Komponente (2).

2. Arbeitskopf nach Anspruch 1, wobei die Rasteinheit (10; 25) an das zweite Gehäuse (8; 20) angeschlossen ist, um von der Ausrichteinheit (12) um die Achse (5) herum bewegt zu werden.

3. Arbeitskopf nach Anspruch 1, wobei die Ausrichteinheit (12) ein umlaufendes Element (15) umfasst, das derart angeordnet ist, dass es um die Achse (5) umläuft; die Rasteinheit (10; 25) ist an das umlaufende Element (15) angeschlossen.

4. Arbeitskopf nach einem der vorausgegangenen Ansprüche, weiterhin umfassend einen Detektor (E) zum Erfassen der Position der Rasteinheit (10; 25) während dessen Bewegung unter der Schubkraft der Ausrichteinheit (12).

5. Arbeitskopf nach einem der vorausgegangenen Ansprüche, weiterhin umfassend einen Detektor (E) zum Erfassen der Position der Rasteinheit (10; 25), wenn sich dieser mit der Komponente (2) in Kontakt befindet; der Arbeitskopf ist beweglich, um das Schneidelement (9; 24) und/oder die Rasteinheit (10; 25) in Bezug auf die Komponente (2) als Funktion der Position zu bewegen, erfasst vom Detektor (E).

6. Arbeitskopf nach einem der Ansprüche 1 bis 4, wobei der Arbeitskopf und die Komponente (2), die bearbeitet wird, relativ zueinander beweglich sind, sodass die Rasteinheit (25) einem Profil der Komponente (2) folgen kann; die Ausrichteinheit (12) ist derart gestaltet, dass sie das Schneidwerkzeug (24) und die Rasteinheit (25) als Funktion des Profils der Komponente (2) bewegt.

7. Arbeitskopf nach einem der Ansprüche 1 bis 4, wobei die Rasteinheit (10) einen Antisplitterblock umfasst, der beweglich ist zwischen einer Arbeitsposition, in welcher er im Wesentlichen in Kontakt mit der Komponente (2) steht, und wenigstens einer Rastposition, in welcher der Antisplitterblock die Komponente (2) freigibt.

8. Arbeitskopf nach einem der vorausgegangen Ansprüche, wobei die Werkzeugeinheit (7; 28; 31) eine austauschbare Einheit umfasst, die an die Elektrospindel angeschlossen ist.

9. Arbeitskopf nach einem der vorausgegangenen Ansprüche, wobei das zweite Gehäuse (8; 20) drehfest mit dem ersten Gehäuse (4) ist, um in Bezug auf das erste Gehäuse (4) um die Achse (5) umzulaufen.

10. Arbeitskopf nach einem der Ansprüche 1 bis 8, weiterhin umfassend einen Tragrahmen, der derart montiert ist, dass er um die Achse (5) umläuft; das erste Gehäuse (4) ist an den Tragrahmen angeschlossen und trägt das zweite Gehäuse (8; 20), das mit ihm verbunden ist.

11. Verfahren zum Bearbeiten von Komponenten (2) aus Holz oder dergleichen mit einem Arbeitskopf, umfassend eine Elektrospindel, die ihrerseits ein erstes Traggehäuse (4) und einen ersten Elektromotor umfasst, der sich innerhalb des ersten Gehäuses (4) befindet, und eine erste Ausgangswelle aufweist, derart angeordnet, das sie um eine Achse (5) umläuft, angeschlossen an die Antriebseinheit (3) und ihrerseits umfassend ein zweites Traggehäuse (8; 20), das um die Achse (5) umläuft, eine Eingangswelle (6; 19), die mit dem zweiten Gehäuse (8; 20) in Triebverbindung steht und an die erste Ausgangswelle angeschlossen ist, und ein Schneidwerkezug (9; 24), das von der Eingangswelle (6; 19) angetrieben ist, und eine Ausrichteinheit (12) zum Ausrichten des zweiten Gehäuses (8; 20) um die Achse (5); die Ausrichteinheit (12) umfasst einen zweiten Elektromotor (13) mit einer zweiten Ausgangswelle (15), die um die Achse (5) umläuft; umfassend die folgenden Verfahrensschritte:
Bewegen der Rasteinheit (10; 25) in Kontakt mit einer zu bearbeitenden Komponente (2) mittels der Ausrichteinheit (12); die Rasteinheit (10; 25) ist eine Anti-Splittereinheit (10) oder eine Abtasteinheit (25) oder eine Kopiereinheit (25) oder eine Abtast- und Kopiereinheit (25);
**gekennzeichnet durch** die folgenden weiteren Verfahrensschritte:
Messen eines Drehmomentes, erzeugt vom zweiten Elektromotor (13); und
selektiv Kontrollieren einer Rastkraft (F) ausgeübt von der Rasteinheit (10; 25) auf die zu bearbeitende Komponente (2) als Funktion des gemessenen Drehmomentes.

12. Verfahren nach Anspruch 11, weiterhin umfassend die folgenden Verfahrensschritte:
Erfassen der Position der Rasteinheit (10; 25) während seiner Bewegung unter der Schubkraft der Ausrichteinheit (12).

13. Verfahren nach Anspruch 11 oder 12, weiterhin umfassend die folgenden Verfahrensschritte:
Erfassen der Position der Rasteinheit (10; 25), wenn sich diese in Kontakt mit der Komponente (2) befindet; und
Bewegen des Schneidwerkzeuges (24) und/oder der Rasteinheit (10; 25) in Bezug auf die Komponente (2) in Funktion von der erfassten Position.

14. Verfahren nach Anspruch 11 oder 12, weiterhin umfassend die folgenden Verfahrensschritte:
Bewegen des Arbeitskopfes und der Komponente (2), die bearbeitet wird, in Bezug zueinander, um es der Rasteinheit (25) zu ermöglichen, einem Profil der Komponente (2) zu folgen; und
Bewegen des Schneidwerkzeuges (24) und der Rasteinheit (25) als Funktion des Profiles der Komponente (2).

## Revendications

1. Tête de travail pour l'usinage de composants de bois (2) ou similaires comprenant une broche électrique (3) comprenant, à son tour, une première carcasse de support (4) et un premier moteur électrique qui est logé à l'intérieur de la première carcasse (4) et présente un premier arbre de sortie monté afin de tourner autour d'un axe (5) ; un ensemble d'outil (7 ; 18 ; 31) monté sur la broche électrique (3) et comprenant, à son tour, une seconde carcasse de support (8 ; 20) montée afin de tourner autour dudit axe (5), un arbre d'entrée (6 ; 19) qui est mis en prise d'une manière rotative à travers la seconde carcasse (8 ; 20) et est raccordé au premier arbre de sortie, et un outil de coupe (9 ; 24) qui est actionné par ledit arbre d'entrée (6 ; 19) ; un dispositif d'orientation (12) pour orienter la seconde carcasse (8 ; 20) autour dudit axe (5) ; et un élément d'appui (10 ; 25) qui est déplacé par le dispositif d'orientation (12) en contact avec un composant (2) qui est usiné ; l'élément d'appui (10 ; 25) étant un élément anti-éclats (10) ou un élément de traçage (25) ou un élément de duplication (25) ou un élément de traçage et de duplication (25) ; et **caractérisée en ce que** le dispositif d'orientation (12) comprend un second moteur électrique (13) ayant un second arbre de sortie (15) qui est monté afin de tourner autour dudit axe (5) ; un dispositif de mesure (17) étant prévu afin de mesurer un couple généré par le second moteur électrique (13) et pour contrôler sélectivement une force d'appui (F) exercée par l'élément d'appui (10 ; 25) sur le composant (2) qui est usiné.

2. Tête de travail selon la revendication 1, dans laquelle l'élément d'appui (10 ; 25) est monté sur la seconde carcasse (8 ; 20) afin d'être déplacé par le dispositif d'orientation (12) autour dudit axe (5).

3. Tête de travail selon la revendication 1, dans laquelle le dispositif d'orientation (12) comprend un élément rotatif (15) qui est assemblé afin de tourner autour dudit axe (5) ; l'élément d'appui (10 ; 25) étant monté sur l'élément rotatif (15).

4. Tête de travail selon l'une quelconque des revendications précédentes, et comprenant en outre un dispositif de détection (E) pour détecter la position de l'élément d'appui (10 ; 25) pendant son mouvement sous la poussée du dispositif d'orientation (12).

5. Tête de travail selon l'une quelconque des revendications précédentes et comprenant en outre un dispositif de détection (E) pour détecter la position de l'élément d'appui (10 ; 25) lorsqu'il est agencé en contact avec le composant (2) ; la tête de travail étant mobile, afin de déplacer l'outil de coupe (9 ; 24) et/ou l'élément d'appui (10 ; 25) par rapport au composant (2) en fonction de la position détectée par le dispositif de détection (E).

6. Tête de travail selon l'une quelconque des revendications 1 à 4, dans laquelle la tête de travail et le composant (2) qui est usiné, sont mobiles l'un par rapport à l'autre, afin de permettre à l'élément d'appui (25) de suivre un profil du composant (2) lui-même ; le dispositif d'orientation (12) étant approprié pour déplacer l'outil de coupe (24) et l'élément d'appui (25) en fonction du profil du composant (2).

7. Tête de travail selon l'une quelconque des revendications 1 à 4, dans laquelle l'élément d'appui (10) comprend un bloc anti-éclats, qui est mobile entre une position de travail dans laquelle le bloc anti-éclats est agencé sensiblement en contact avec le composant (2) et au moins une position d'appui dans laquelle le bloc anti-éclats dégage le composant (2) lui-même.

8. Tête de travail selon l'une quelconque des revendications précédentes, dans laquelle l'ensemble d'outil (7 ; 18 ; 31) comprend un ensemble interchangeable qui est monté sur la broche électrique elle-même.

9. Tête de travail selon l'une quelconque des revendications précédentes, dans laquelle la seconde carcasse (8 ; 20) est couplée de manière rotative à la première carcasse (4) afin de tourner par rapport à la première carcasse (4), autour dudit axe (5).

10. Tête de travail selon l'une quelconque des revendications 1 à 8 et comprenant, en outre, un bâti de support qui est monté pour tourner autour dudit axe (5) ; la première carcasse (4) étant montée sur le bâti de support et supportant la seconde carcasse (8 ; 20), qui est raccordée à ce dernier.

11. Procédé pour usiner des composants de bois (2) ou similaires avec une tête de travail et comprenant une broche électrique (3) comprenant, à son tour, une première carcasse de support (4) et un premier moteur électrique qui est logé à l'intérieur de la première carcasse (4) et présente un premier arbre de sortie monté afin de tourner autour d'un axe (5) ; un ensemble d'outil (7 ; 18 ; 31) monté sur l'ensemble d'actionnement (3) et comprenant, à son tour, une seconde carcasse de support (8 ; 20) assemblée afin de tourner autour dudit axe (5), un arbre d'entrée (6 ; 19) qui est mis en prise d'une manière rotative à travers la seconde carcasse (8 ; 20) et est raccordé au premier arbre de sortie, et un outil de coupe (9 ; 24) qui est actionné par ledit arbre d'entrée (6 ; 19) ; et un dispositif d'orientation (12) pour orienter la seconde carcasse (8 ; 20) autour dudit axe (5), le dispositif d'orientation (12) comprenant un second moteur électrique (13) ayant un second arbre de sortie (15) monté afin de tourner autour dudit axe (5) ; le procédé comprenant l'étape consistant à :
déplacer, au moyen du dispositif d'orientation (12), un élément d'appui (10 ; 25) en contact avec un composant (2) qui est usiné ; l'élément d'appui (10 ; 25) étant un élément anti-éclats (10) ou un élément de traçage (25) ou un élément de duplication (25) ou un élément de traçage et de duplication (25) ;
et étant **caractérisé en ce qu'**il comprend en outre les étapes consistant à :
mesurer un couple généré par le second moteur électrique (13) ; et
contrôler sélectivement une force d'appui (F) exercée par l'élément d'appui (10 ; 25) sur le composant (2) qui est usiné en fonction du couple mesuré.

12. Procédé selon la revendication 11 et comprenant, en outre, l'étape consistant à :
détecter la position de l'élément d'appui (10 ; 25) pendant son mouvement sous la poussée du dispositif d'orientation (12).

13. Procédé selon la revendication 11 ou 12 et comprenant en outre les étapes consistant à :
détecter la position de l'élément d'appui (10 ; 25) lorsqu'il est agencé en contact avec le composant (2) ; et
déplacer l'outil de coupe (24) et/ou l'élément d'appui (10 ; 25) par rapport au composant (2) en fonction de la position détectée.

14. Procédé selon la revendication 11 ou 12 et comprenant en outre les étapes consistant à :
déplacer la tête de travail et le composant (2) qui est usiné, l'un par rapport à l'autre, afin de permettre à l'élément d'appui (25) de suivre un profil du composant (2) lui-même ; et
déplacer l'outil de coupe (24) et l'élément d'appui (25) en fonction du profil du composant (2).
